# EUROPEAN PATENT SPECIFICATION

(11) **EP 4 555 597 B1**
(45) Date of publication and mention of the grant of the patent: **10.06.2026**
(21) Application number: 23738799.8
(22) Date of filing: 11.07.2023
(51) Int. Cl.: H02G 3/16, H01R 13/58, H02G 15/007, H02G 3/14, F16B 2/06, H02G 3/06, H01R 9/03, H01R 9/24

(54) **ELECTRONIC DEVICE WITH TERMINAL BOX**
ELEKTRONISCHE VORRICHTUNG MIT ANSCHLUSSKASTEN
DISPOSITIF ÉLECTRONIQUE AVEC BOÎTE À BORNES

(30) Priority: 15.07.2022 WO PCT/CN2022/106112; 25.08.2022 EP 22192169
(43) Date of publication of application: 21.05.2025
(73) Proprietor: Signify Holding B.V., 5656 AE Eindhoven (NL)
(72) Inventor: ZHANG, Jia, 5656 AE Eindhoven (NL); WANG, Zhipei, 5656 AE Eindhoven (NL); ZHANG, Huan, 5656 AE Eindhoven (NL)
(74) Representative: Verweij, Petronella Daniëlle
(86) International application number: PCT/EP2023/069104
(87) International publication number: WO 2024/013125

(56) References cited:
- EP-A1- 2 413 433
- EP-A1- 2 920 850
- EP-A1- 3 783 757
- EP-B1- 2 920 850
- CN-A- 101 685 957
- FR-A1- 2 779 012
- US-A1- 2020 284 284

## Description

### FIELD OF THE INVENTION

The present invention relates to the field of electronic devices, in particular, electronic devices with terminal boxes.

### BACKGROUND OF THE INVENTION

It is common for electronic devices, such as lighting arrangements, to have one or more terminal boxes. Each terminal box houses a wire connector or wire terminal for connecting to one or more wires that carry signals to and/or from the electronic device. Each terminal box covers the wire connector when the electronic device is in use, to maintain electrical isolation to an installer or user of the electronic device.

To reduce the strain or stress to the wire connector and/or internal components (e.g., a PCB) of the electronic device, it is common to clamp the wire(s) received into the terminal box. The clamping moves the first point of fixed physical contact between the wire(s) and the electronic device away from the wire connector, such that external movement of the wire(s) to the electronic device will not cause significant movement of the wire(s) at the terminal box.

FR 2779012A1 discloses a grip mechanism distorts a cable as the two section pieces are brought together.

EP 3783757A1 discloses a lamp and an integrated terminal box.

EP 2413433A1 discloses a connector arrangement for connecting cables to an electrical lighting device.

There is an ongoing desire to improve the effectiveness, reliability and robustness of electronic devices to external stresses and strains, as well as to improve a convenience and safety of installation or manipulation of the electronic device.

### SUMMARY OF THE INVENTION

The invention is defined in independent claim 1. Preferred embodiments are defined in the dependent claims.

There is proposed an electronic device comprising: a terminal box comprising a base and a cover moveable with respect to the base; a wire connector, housed in the terminal box, for receiving one or more wires for carrying one or more electrical signals or electrical power to/from the electronic device; a wire clamp supported by the cover, the wire clamp configured to be movable, with respect to the cover when the cover covers the wire connector, between a first clamp position for clamping any wire received by the wire connector to the base of the terminal box and a second clamp position for declamping any wire received by the wire connector; at least one screw supported by the wire clamp; and at least one screw receiver coupled to the base, the at least one screw receiver comprising a respective screw receiver for each screw supported by the wire clamp, each screw being configured to be screwable into its respective screw receiver, wherein the at least one screw and at least one screw receiver are configured to, when the wire clamp is in the first clamp position and at least one screw is screwed into its respective screw receiver, geometrically co-operate to hold the wire clamp in the first clamp position and to hold the cover to the base of the terminal box.

The proposed approach thereby provides a terminal box for an electronic device, in which a cover of the terminal box is secured to the base of the terminal box by one or more screws. The screw(s) also serve a second purpose of clamping (via a wire clamp) a wire or wires received into the terminal box to the base. This approach thereby provides a space-efficient and secure mechanism for both clamping a wire or wires (to reduce stresses or strains on the wire(s) and providing a cover for the wire connector to ensure a safety of the terminal box.

To facilitate this dual function, the wire clamp is supported by the cover (e.g., coupled or secured thereto), but with a degree of movement to allow for clamping and unclamping of the wire(s) when the cover covers the wire connector. This allows the wire clamp to perform its clamping role, whilst also acting as a contributing member to the securing of the cover to the base.

In some examples, the cover is a moveable cover configured to move between a first cover position, in which the wire connector is exposed, and a second cover position, in which the wire connector is covered by the cover; and the wire clamp is moveable between the first and second clamp positions when the moveable cover is in the second cover position.

The cover is moveably coupled to the base of the terminal box. This reduces a chance that the cover and base will become separated from one another, e.g., during transportation or movement of the electronic device before use.

In one examples, the cover is rotatably coupled to the base of the terminal box. This provides a simple and compact mechanism for allowing movement of the cover with respect to the base of the terminal box.

The base and cover of the terminal box may comprise a first snap-fit connection system configured to, when the cover is moved to the second cover position, engage and hold the cover in the second cover position. This approach allows the cover to be held in the second cover position, e.g., to aid during securing of the screw(s) to the screw receiver(s), i.e., during installation of the electronic device. This approach also allows the cover to be secured to the base during transportation of the electronic device, e.g., to reduce vibrating, rattling and/or damage before use.

In some examples, the cover and wire clamp comprise a second snap-fit connection system configured to, when engaged, hold the wire clamp in the first clamp position with respect to the cover. Similarly, this approach allows the wire clamp to be (temporarily) held in the first clamp position, e.g., to aid during securing of the screw(s) to the screw receiver(s), i.e., during installation of the electronic device. For instance, the wire clamp can be held in the first clamp position without the need for an individual to apply a bias or pressure, increasing an ease of installation. This approach also allows the wire clamp to be secured to the cover during transportation of the electronic device, e.g., to reduce vibrating, rattling and/or damage before use.

In some examples, the cover and wire clamp comprise a third snap-fit connection system configured to, when engaged, hold the wire clamp in the second clamp position with respect to the cover.

This approach can be used to allow the wire clamp to be secured to the cover during transportation of the electronic device, e.g., to reduce vibrating, rattling and/or damage, before use. The use of the third snap-fit connection system for this purpose is advantageous over the second snap-fit connection system (if present), in that the third snap-fit connection system allows a wire to be inserted or manipulated with respect to the wire clamp when the cover is in the second cover position - without needing to disengage a snap-fit connection system. This can aid in the installation of the electronic device.

According to the invention, the cover and wire clamp comprise a plurality of snap-fit connectors each configured to, when engaged, hold the wire clamp in a different potential first clamp position with respect to the cover, to thereby accommodate different sizes of the one or more wires to be received by the wire connector. This approach improves the flexibility of the electronic device to different installation environments, e.g., different wire thicknesses or the presence or absence of cable covers for a set of one or more wires.

In some examples, the at least one screw comprises at least two screws and the at least one screw receiver comprises at least two screw receivers. The use of at least two screws improves the clamping functionality of the wire clamp, providing a more secure connection. This thereby facilitates improved robustness and protection against external manipulations of the wire(s).

According to the invention, the wire clamp is slidably coupled to the cover. This provides an easy-to-operate and compact wire clamp. Slidably coupling the wire clamp to the cover also means that the screwing of the screws to secure the wire clamp in the first clamp position can naturally align with the sliding of the wire clamp, thereby increasing an ease of securing the wire clamp to the base and improving the effectiveness of the clamping.

In some examples, each screw is rotatably coupled to the wire clamp, such that each screw is held by the wire clamp but is screwable into a respective screw receiver when the wire clamp is in the first clamp position. This reduces the likelihood of the screw(s) becoming separated from the remainder of the electronic device, e.g., during initial transportation.

Optionally, the cover is formed of transparent and/or translucent material. This approach means that an observer of the electronic device is able to see the wire connector without opening the cover. This allows for any open circuits, faults or disconnections (or the absence thereof) to be checked and identified with ease and safety. This improves an ease of operating and using the electronic device.

The first clamp position, the wire clamp and base may co-operate to clamp any wire received by the wire connector so as to relieve or reduce a strain on any received wire to manipulation of the wire external to the terminal box.

In some examples, the one or more wires are housed in a cable housing; and when in the first clamp position, the wire clamp is configured for clamping the cable housing, and thereby any wire received by the wire connector, to the base of the terminal box.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates a portion of an electronic device comprising a terminal box;
Figure 2 illustrates a cover for the terminal box;
Figure 3 illustrates a portion of an electronic device demonstrating a wire clamp in a first clamp position;
Figure 4 illustrates a portion of an electronic device demonstrating the wire clamp in a second clamp position;
Figure 5 illustrates a portion of the cover for the terminal box;
Figure 6 provides an exploded view of the portion of the electronic device;
Figure 7 illustrates a portion of an electronic device comprising a terminal box receiving a plurality of wires; and
Figure 8 illustrates the overall electronic device.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the claims. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Proposed approaches provide a mechanism for simultaneously securing both a cover and a wire clamp to a base of a terminal box, thereby providing protective and wire-clamping functionality at the same time. One or more screws are used to secure a wire clamp to the base of the terminal box. The wire clamp is supported by the cover, such that the cover is also secured to the base of the terminal box, thereby covering and protecting the clamped wire(s).

Embodiments can be employed in any scenario in which an electronic device has a terminal box for connecting to one or more external wires. Example scenarios include lighting and/or wireless communication arrangements.

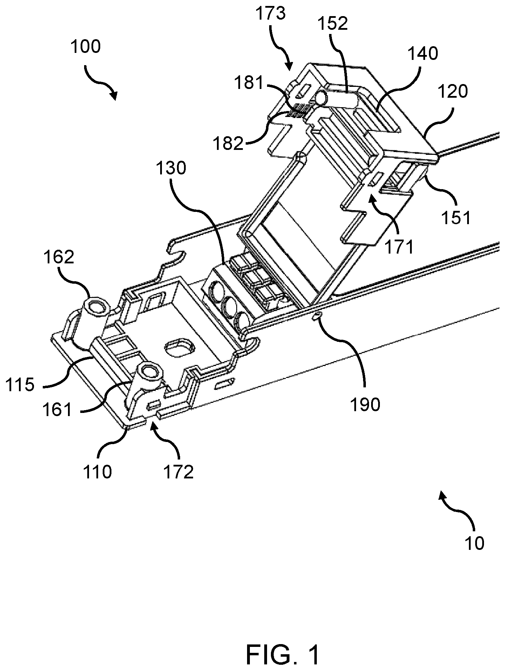

Figure 1 illustrates a portion of an electronic device 10 according to an embodiment of the invention. The electronic device 10 comprises a terminal box 100 comprising a base 110 and a cover 120. The cover is moveable with respect to the base.

The terminal box 100 houses a wire connector 130. The wire connector is configured to receive one or more wires (not visible in Figure 1). The wire(s) provide electrical connection to the electronic device, and is/are therefore configured to carry one or more electrical signals or electrical power to/from the electronic device. Suitable examples of wire connectors, sometimes called cable connectors, are known to the skilled person, and typically comprise any suitable connecting means for electrically and mechanically coupling to one or more wires. One example is a wire clamp terminal block. Another example is a level connector. Yet another example is an in-line or push-wire connector.

The electronic device 10 further comprises a wire clamp 140, which is supported by/in the cover 120.

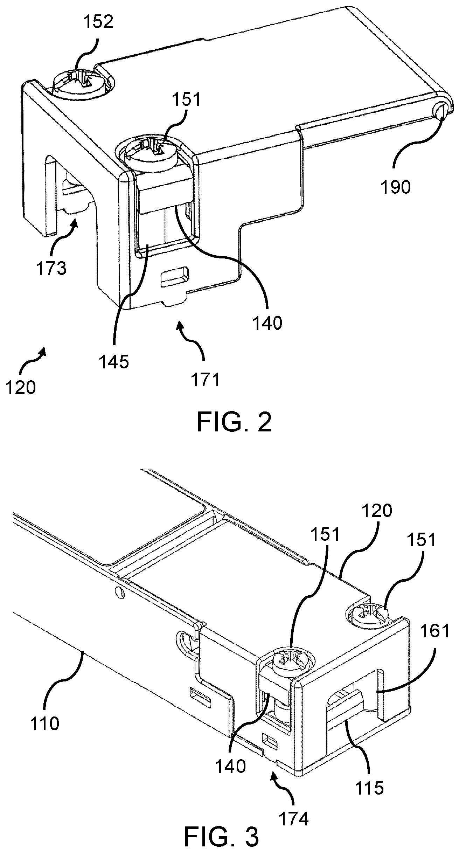

Figure 2 illustrates the cover 120, and provides a clearer view components of the electronic device supported by/in the cover 120, such as the wire clamp 140.

The wire clamp 140 is moveable between a first clamp position for clamping any wire received by the wire connector to the base of the terminal box and a second clamp position for declamping any wire received by the wire connector.

The wire clamp 140 is slidably coupled to the cover. This provides a mechanism for moving the wire clamp between the first and second clamp positions whilst structurally coupling the wire clamp to the cover.

In the illustrated example, the wire clamp 140 is held in a slot 145 (or slots) of the cover 120. The wire clamp 140 is able to move within the slot(s), to thereby slidably move with respect to the cover. The slot(s) 145 further serve(s) to restrict a maximum movement of the wire clamp, as well as prevent (or increase a difficulty) of removing the wire clamp from the cover for improved ease of transportation and/or reduced breakage.

Thus, the wire clamp can move in an up and/or downward direction, with respect to the bottom of the cover, without dropping off the cover.

As perhaps best illustrated in Figure 2, the electronic device 10 further comprises at least one screw 151, 152 supported by the wire clamp. As later explained, the screw(s) is/are used to clamp the wire(s) and to secure the cover to the base of the terminal box. The use of two or more screws, e.g., two screws as illustrated, increases the security or robustness of this clamping and/or securing. However, in other embodiments, the at least one screw may comprise a single screw. This reduces manufacturing costs and can reduce device size, and may be suitable for certain use-case scenarios, such as low-voltage, low-size electronic devices.

For improved safety, each screw is preferably a flat tip and/or flat base screw. This reduces the likelihood of the screw accidentally or unintentionally piercing a wire and/or injuring a user/installer of the electronic device 10.

Turning back to Figure 1, the electronic device 10 further comprises at least one screw receiver 161, 162 coupled to the base 110. The at least one screw receiver comprises a respective screw receiver for each screw supported by the wire clamp. Thus, there are at least as many screw receivers 161, 162 as there are screws 151, 152. Each screw can be screwed into its respective screw receiver. Thus, each screw had a thread, and each screw receiver has an internal surface with a complimentary thread for receiving the screw.

The screw(s) and screw receiver(s) are configured to, when the wire clamp is in the first clamp position and each screw is screwed into its respective screw receiver, geometrically co-operate to hold the wire clamp in the first clamp position and to hold the cover 120 to the base 110 of the terminal box 100. This is analogous to a nut-and-bolt arrangement for securing each screw to its respective screw receiver.

Thus, screwing the screw(s) into its/their screw receiver(s) secures the cover to the base thereby restricting/preventing movement of the cover with respect to the base. At the same time, this procedure holds the wire clamp 140 in a first clamp position, e.g., clamps a wire between the wire clamp 140 and the base 110.

The cover 120 is secured to the base 110 by this procedure because the wire clamp 140 is held or supported by the cover. Thus, by securing the wire clamp 140 to the base 100 (via the screw(s) 151, 152 and screw receiver(s) 161, 162), the cover is simultaneously secured to the base.

Clamping the wire(s) to the base may cause the wire clamp and base to co-operate so as to relieve or reduce a strain on any wire clamped therebetween to manipulation of the wire external to the terminal box. Thus, use of the wire clamp will mean that movement of the wire(s) external to the terminal box will result in result in reduced stress or strain of the wire at the wire connector, making the electrical connection between the wire(s) and the electronic device more secure.

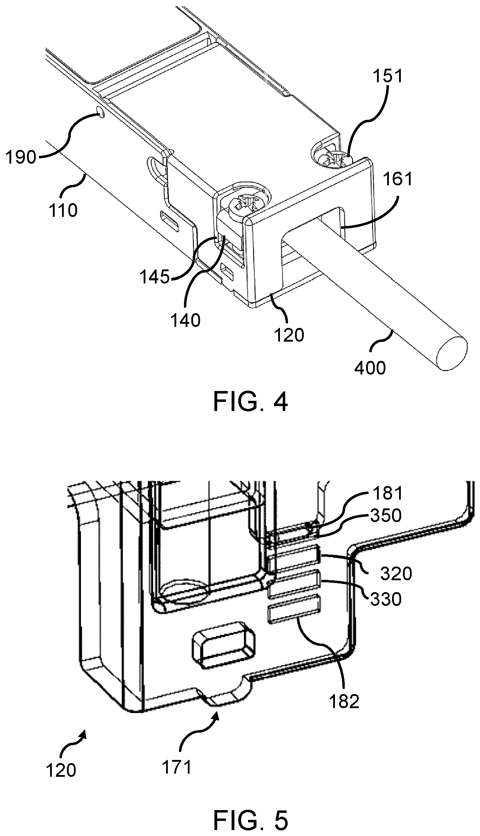

The movement and operation of the wire clamp is perhaps best illustrated by Figures 3 and 4. Figure 3 depicts the electronic device when the wire clamp is in the first clamp position. Figure 4 depicts the electronic device when the wire clamp is in the second clamp position.

As illustrated, as the wire clamp 140 moves from the first clamp position to the second clamp position (when the cover 120 covers the wire connector), it moves towards the base 110. This can be considered to be a movement in a downward direction. If one or more wires (e.g., a set of wires housed in a cable 400) is connected to the wire connector 130, as illustrated in Figure 4, the wire clamp will clamp the one or more wires between itself and the base 110. When the wire clamp clamps the one or more wires, the wire clamp has reached the first clamp position.

Each screw may be rotatably coupled to the wire clamp, such that each screw is held by the wire clamp but is screwable into a respective screw receiver when the wire clamp is in the first clamp position. In particular examples, each screw 151, 152 is secured to the wire clamp 140, such that it cannot be removed from the wire clamp, e.g., without breaking the electronic device 10.

For improved clamping functionality, the base 110 may comprise a raised clamping surface 115. The wire(s) may be clamped between the wire clamp 140 and the raised clamping surface 115 when the wire clamp is in the first clamp position (and the cover is covering the wire connector). The raised clamping surface may, for instance, be a narrow strip of material that protrudes outwardly from the base 110. The raised clamping surface 115 reduces a likelihood that any clamped wire will slide or slip out of the terminal box.

As previously explained, the wire clamp 140 is slidably coupled to the cover, e.g. via one or more slots 145. The direction of the sliding movement of the wire clamp is preferably parallel to the longitudinal direction of the screw(s), i.e., the direction or axis about which the screw(s) are rotated to screw into the screw receiver(s). This provides a greater freedom of movement of the wire clamp to ensure that a desired amount of clamping by the wire clamp is provided.

Figures 1, 3 and 4 further illustrate a movement of the cover in the illustrated embodiment.

In particular, the cover 120 may be a moveable cover that is configured to move between a first cover position, in which the wire connector is exposed, and a second cover position, in which the wire connector is covered by the cover. The first cover position is illustrated in Figure 1. The second cover position is illustrated in Figures 3 and 4.

The cover 120 is moveably coupled to the base 110 of the terminal box.
This approach reduces the chances that the cover 120 and base 110 will become misplaced with respect to one another (e.g., during transport).

In the illustrated example, the cover 120 is coupled to the base 110 via a hinge 190. The hinge 190 may be formed from a simple pin and pin receiver configuration. In this way, the cover is rotatably coupled to the base 110, such that moving the cover between the first cover position and the second cover position is achieved by rotating the cover 120 with respect to the base 110.

In other examples, the cover could be slidably coupled to the base, e.g., via a sliding mechanism. Such a sliding mechanism may allow the wire connector to be covered and uncovered by sliding the cover with respect to the base (e.g., to selectively expose the wire connector).

Figures 1 to 4 further illustrate another optional component of the electronic device, namely a first snap-fit connection system 171, 172, 173, 174.

The first snap-fit connection system is configured to, when the cover is moved to the second cover position, engage and hold the cover in the second cover position. The first-snap fit connection system comprises a first pair of interlocking parts 171, 172, which can engage with one another, as well as a second pair of interlocking parts 173, 174, which can engage with one another. The pairs of interlocking parts are located on opposite sides of the cover.

Thus, the cover may be "snapped" into place at the second cover position. This aids in holding the cover in the second cover position, e.g., whilst screwing the screw(s) to move the wire clamp to the first clamp position. This approach also aids in securing the cover to the base, e.g., during transport of the electronic device before installation/use. This reduces vibration between the cover and the base.

The securing of the cover in the second cover position by the first snap fit connection system may be less strong than the securing of the cover in the second cover position by the screw(s) 151, 152 and screw receiver(s). In particular, moving the cover (without breaking the electronic device) from the second cover position when secured by the first snap fit connection system only may be possible using a human level of force (e.g. <1000N). Conversely, moving the cover (without breaking the electronic device) from the second cover position when secured by the screw(s) and screw receiver(s) may not be possible using a human level of force (e.g. <1000N) without unscrewing the screw(s).

Thus, the use of the proposed approach means that the cover can only be opened only if the screw(s) are loosened. This improves the protection of the wire connector and the overall safety of the electronic device.

Figure 5 illustrates a further optional component of the electronic device, namely a plurality of snap-fit connectors 181, 182, 350, 320, 330, which is/are partially visible in Figures 1 to 4. For the sake of illustrative clarity, the electronic device is illustrated in skeleton form.

The plurality of snap-fit connectors are each configured to, when engaged, hold the wire clamp in a different potential first clamp position with respect to the cover, to thereby accommodate different sizes of the one or more wires to be received by the wire connector.

Thus, there is at least a second snap-fit connection system 181, 182 that is configured to, when engaged, hold the wire clamp in the first clamp position (i.e., a first potential first clamp position) with respect to the cover. The second snap-fit connection system comprises a pair of interlocking parts 181, 182 that are able to snap or clip together to restrict or prevent a movement of the cover 120 and the wire clamp 140. In particular, the second snap-fit connection system may comprise a first element 181 and a second element 182. The first element 181 is formed on, or directly coupled to, the wire clamp 140. The second element is formed on/in the cover 120. The first element snaps or clips into the second element, to thereby hold the wire clamp to the cover in the first clamp position.

In the illustrated example, the first element 181 is a projection and the second element 182 is a hole configured to receive the projection to thereby form the snap-fit. Other approaches will be apparent to the skilled person. For instance, the first element may instead be a hole, with the second element being a projection. As another example, the first element may be a hooking element and the second element may be a loop element for receiving the hook element, or vice versa.

Of course, the plurality of snap-fit connectors may comprise additional elements for defining alternative first clamp positions. For instance, the plurality of snap-fit connectors may comprise a third element 320 and a fourth element 330. Here, these elements are formed as holes on/in the cover 120, although modifications will be readily apparent to the skilled person (e.g., to make these elements projections or hooking/loop elements). The first element 181 may be able to clip into one of the third element 320 and fourth element 330 to define alternative first clamp positions.

Thus, the second element 182, third element 320 and fourth element 330 define alternative locations for the first clamp position, and therefore define different potential first clamp positions. Each of these elements defines a different height (from the base 110) for the first clamp position, i.e., define first clamp positions with different distances between the wire clamp 140 and the base 110. In the illustrated example, teach of these elements is similarly formed as a hole, gap or aperture in the cover 120.

In the illustration of Figure 5, only one side of the electronic device has been shown (for demonstrating the plurality of snap-fit connectors). The other side of the electronic device may comprise similar elements at corresponding locations (e.g., in a similar manner to the first snap fit connection system).

Figure 5 further illustrates yet another optional component of the electronic device, namely a third snap-fit connection system 181, 350 configured to, when engaged, hold the wire clamp in the second clamp position with respect to the cover. Thus, when engaged, the third snap-fit connection system 181, 350 declamps any wire(s) from the wire clamp.

The third snap-fit connection system also comprises a pair of interlocking parts 181, 350 that are able to snap or clip together to restrict or prevent a movement of the cover 120 and the wire clamp 140.

The third snap-fit connection system may comprise the first element 181 and a fifth element 350. The first element 181 may be configured to snap or clip into the fifth element to thereby engage the third snap-fit connection system.

In the illustrated example, the first element 181 is a projection and the fifth 350 is a hole configured to receive the projection to thereby form the snap-fit. Other approaches will be apparent to the skilled person. For instance, the first element may instead be a hole, with the fifth element being a projection. As another example, the first element may be a hooking element and the fifth element may be a loop element for receiving the hook element, or vice versa.

This feature can hold the clamp in position not to have vibration between clamp and cover during transportation. And also temporary hold the clamp to be stable before tighten the screw

Thus, in approaches that employ the plurality of snap-fit connectors (including the second snap-fit connection system) and the third snap-fit connection system, a single element (the first element 181) may be selectively snapped or clipped to a receiving element 182, 320, 330, 350. In this way, the wire clamp can be snapped or clipped into different positions with respect to the cover.

The plurality of snap-fit connectors and/or the third snap-fit connection system may be formed on the inside of the terminal box. This improves a security of the terminal box, reducing a risk of tampering or movement of the wire clamp.

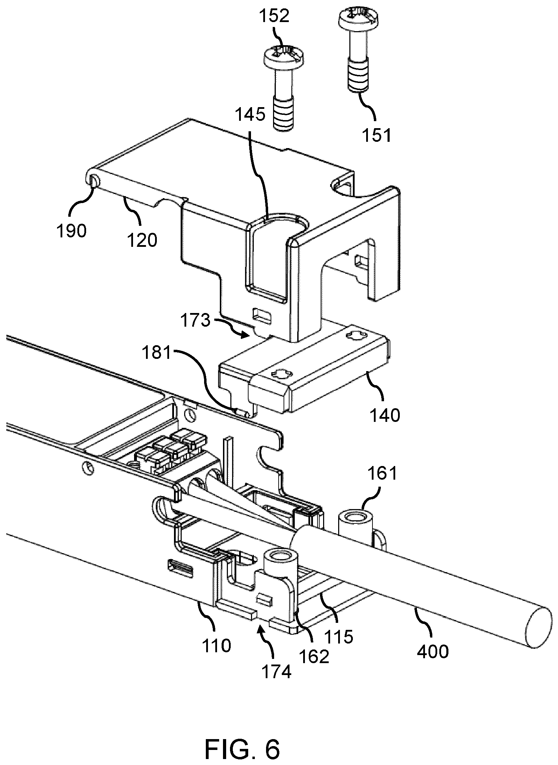

Figure 6 provides an exploded view of the portion of electronic device, which provides further contextual understanding of the relationship between various features.

In particular, Figure 6 more clearly illustrates the structure of the wire clamp 140 and the relationship between the first element 181 (here: a projection) and the wire clamp 140. A corresponding hole for the second element (not visible) is disposed on the internal wall of the cover 120.

Figure 6 further illustrates the structure of the screw(s) 151, 152 for use with the proposed wire clamp 140. In particular, the screw(s) are only partly threaded, so that the unthreaded portion is supported by the wire clamp 140, and the threaded portion is screwable into the screw receiver(s) 161, 162.

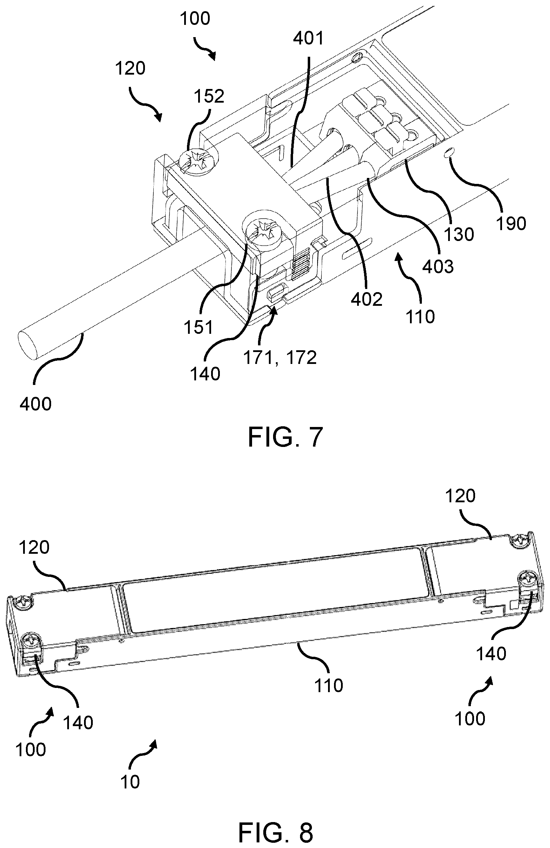

Figure 7 illustrates a portion of an electronic device 10 when a set of wires 401, 402, 403 have been connected to the wire connector 130.

The one or more wires may be are housed in a cable housing 400, i.e., to form a cable. When in the first clamp position, the wire clamp may be configured for clamping the cable housing, and thereby any wire received by the wire connector, to the base of the terminal box.

Figure 7 also illustrates an optional feature of the electronic device, in which the cover is formed of transparent and/or translucent material. This feature advantageously means that, when the cover and wire clamp are fixed to the base via the screw(s), the installer or user of the electronic device is able to observe the status or security of the wire connection status without opening the cover. This improves an ease of operating and using the electronic device.

Suitable transparent and/or translucent materials for use in forming the cover would be well known to the skilled person, including plastics (preferred for robustness) or glass. Preferably, the transparent and/or translucent material is an insulating material, to improve the safety of the electronic device.

Figure 8 provides a view of a complete electronic device 10, according to an embodiment.

Figure 8 illustrates how the electronic device may comprise a plurality of terminal boxes 100, each with its own associated base 110 and cover 120. Of course, each terminal box may also be associated with a corresponding wire clamp, at least one screw and at least one screw receiver. These may be appropriately configured as previously described.

It will be appreciated that any herein described electronic device may comprise further components or features that are powered and/or controlled by signals or power provided via wire(s) connected to the wire connector and/or provide signals or power along the wire(s) connected to the wire connector. Example components include lighting arrangements, wireless communication modules (e.g., routers, modems or the like), sensing arrangements, battery or cell arrangements and so on. Example sensing arrangements include environment sensors such as temperature sensors, moisture sensors, noise sensors or microphones, altitude sensors and so on. Further example sensing arrangements include motion sensors or wireless scanners.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. An electronic device (10) comprising:
a terminal box (100) comprising a base (110) and a cover (120) moveable with respect to the base;
a wire connector (130), housed in the terminal box, for receiving one or more wires (401, 402, 403) for carrying one or more electrical signals or electrical power to/from the electronic device;
a wire clamp (140) supported by the cover, the wire clamp configured to be slidable, with respect to the cover when the cover covers the wire connector, between a first clamp position for clamping any wire received by the wire connector to the base of the terminal box and a second clamp position for declamping any wire received by the wire connector;
at least one screw (151, 152) supported by the wire clamp; and
at least one screw receiver (161, 162) coupled to the base, the at least one screw receiver comprising a respective screw receiver for each screw supported by the wire clamp, each screw being configured to be screwable into its respective screw receiver,
wherein the at least one screw and at least one screw receiver are configured to, when the wire clamp is in the first clamp position and at least one screw is screwed into its respective screw receiver, geometrically co-operate to hold the wire clamp in the first clamp position and to hold the cover to the base of the terminal box;
wherein the cover and wire clamp comprise a plurality of snap-fit connectors (181, 182, 320, 330) forming a plurality of snap-fit systems ((181, 182), (181, 320), (181, 330)), each configured to, when engaged, hold the wire clamp in a different potential first clamp position with respect to the cover, to thereby accommodate different sizes of the one or more wires to be received by the wire connector.

2. The electronic device of claim 1, wherein:
the cover is a moveable cover configured to move between a first cover position, in which the wire connector is exposed, and a second cover position, in which the wire connector is covered by the cover; and
the wire clamp is moveable between the first and second clamp positions when the moveable cover is in the second cover position.

3. The electronic device of claim 2, wherein the cover is rotatably coupled to the base of the terminal box.

4. The electronic device of any of claims 1 to 3, wherein the base and cover of the terminal box comprise a first snap-fit connection system (171, 172, 173, 174) configured to, when the cover is moved to the second cover position, engage and hold the cover in the second cover position.

5. The electronic device of any of claims 1 to 4, wherein the cover and wire clamp comprise a second snap-fit connection system (181, 182) configured to, when engaged, hold the wire clamp in the first clamp position with respect to the cover.

6. The electronic device of any of claim 1 to 5, wherein the cover and wire clamp comprise a third snap-fit connection system (350, 181) configured to, when engaged, hold the wire clamp in the second clamp position with respect to the cover.

7. The electronic device of any of claims 1 to 6, wherein the at least one screw comprises at least two screws and the at least one screw receiver comprises at least two screw receivers.

8. The electronic device of any of claims 1 to 7, wherein each screw is rotatably coupled to the wire clamp, such that each screw is held by the wire clamp but is screwable into a respective screw receiver when the wire clamp is in the first clamp position.

9. The electronic device of any of claims 1 to 8, wherein the cover is formed of transparent and/or translucent material.

10. The electronic device of any of claims 1 to 9, wherein, when in the first clamp position, the wire clamp and base co-operate to clamp any wire received by the wire connector so as to relieve or reduce a strain on any received wire to manipulation of the wire external to the terminal box.

11. The electronic device of any of claims 1 to 10, further comprising one or more wires, wherein:
the one or more wires are housed in a cable housing (400); and
when in the first clamp position, the wire clamp is configured for clamping the cable housing, and thereby any wire received by the wire connector, to the base of the terminal box.

## Patentansprüche

1. Elektronische Vorrichtung (10), umfassend:
ein Anschlusskasten (100), umfassend eine Basis (110) und eine Abdeckung (120), die in Bezug auf die Basis bewegbar ist;
einen Drahtverbinder (130), der in dem Anschlusskasten untergebracht ist, zum Aufnehmen eines oder mehrerer Drähte (401, 402, 403) zum Tragen eines oder mehrerer elektrischer Signale oder von elektrischer Leistung zu/von der elektronischen Vorrichtung;
eine Drahtklemme (140), die durch die Abdeckung gestützt wird, wobei die Drahtklemme konfiguriert ist, um, in Bezug auf die Abdeckung, wenn die Abdeckung den Drahtverbinder abdeckt, zwischen einer ersten Klemmenposition zum Klemmen eines beliebigen Drahtes, der durch den Drahtverbinder aufgenommen ist, an die Basis des Anschlusskastens und einer zweiten Klemmenposition zum Entklemmen eines beliebigen Drahtes, der durch den Drahtverbinder aufgenommen ist, verschiebbar zu sein;
mindestens eine Schraube (151, 152), die durch die Drahtklemme gestützt wird; und
mindestens eine Schraubenaufnahme (161, 162), die an die Basis gekoppelt ist, die mindestens eine Schraubenaufnahme umfassend eine jeweilige Schraubenaufnahme für jede Schraube, die durch die Drahtklemme gestützt wird, wobei jede Schraube konfiguriert ist, um in ihre jeweilige Schraubenaufnahme einschraubbar zu sein,
wobei die mindestens eine Schraube und mindestens eine Schraubenaufnahme konfiguriert sind, um, wenn die Drahtklemme in der ersten Klemmenposition ist und mindestens eine Schraube in ihre jeweilige Schraubenaufnahme eingeschraubt ist, geometrisch zusammenzuwirken, um die Drahtklemme in der ersten Klemmenposition zu halten und um die Abdeckung an der Basis des Anschlusskastens zu halten;
wobei die Abdeckung und die Drahtklemme eine Vielzahl von Schnappverbindern (181, 182, 320, 330) umfassen, die eine Vielzahl von Schnappverbindersystemen ((181, 182), (181, 320), (181, 330)) ausbilden, die jeweils konfiguriert sind, um, wenn sie in Eingriff stehen, die Drahtklemme in einer unterschiedlichen potentiellen ersten Klemmenposition in Bezug auf die Abdeckung zu halten, um dadurch unterschiedliche Größen des einen oder der mehreren Drähte aufzunehmen, die durch die Drahtverbinder aufzunehmen sind.

2. Elektronische Vorrichtung nach Anspruch 1, wobei:
die Abdeckung eine bewegbare Abdeckung ist, die konfiguriert ist, um sich zwischen einer ersten Abdeckungsposition, in der der Drahtverbinder freigelegt ist, und einer zweiten Abdeckungsposition, in der der Drahtverbinder durch die Abdeckung abgedeckt ist, zu bewegen; und
die Drahtklemme zwischen der ersten und der zweiten Klemmenposition bewegbar ist, wenn die bewegbare Abdeckung in der zweiten Abdeckungsposition ist.

3. Elektronische Vorrichtung nach Anspruch 2, wobei die Abdeckung an die Basis des Anschlusskastens drehbar gekoppelt ist.

4. Elektronische Vorrichtung nach einem der Ansprüche 1 bis 3, wobei die Basis und die Abdeckung des Anschlusskastens ein erstes Schnappverbindersystem (171, 172, 173, 174) umfassen, das konfiguriert ist, um, wenn die Abdeckung in die zweite Abdeckungsposition bewegt wird, einzugreifen und die Abdeckung in der zweiten Abdeckungsposition zu halten.

5. Elektronische Vorrichtung nach einem der Ansprüche 1 bis 4, wobei die Abdeckung und die Drahtklemme ein zweites Schnappverbindersystem (181, 182) umfassen, das konfiguriert ist, um, wenn es in Eingriff steht, die Drahtklemme in der ersten Klemmenposition in Bezug auf die Abdeckung zu halten.

6. Elektronische Vorrichtung nach einem der Ansprüche 1 bis 5, wobei die Abdeckung und die Drahtklemme ein drittes Schnappverbindersystem (350, 181) umfassen, das konfiguriert ist, um, wenn es in Eingriff steht, die Drahtklemme in der zweiten Klemmenposition in Bezug auf die Abdeckung zu halten.

7. Elektronische Vorrichtung nach einem der Ansprüche 1 bis 6, wobei die mindestens eine Schraube mindestens zwei Schrauben umfasst und die mindestens eine Schraubenaufnahme mindestens zwei Schraubenaufnahmen umfasst.

8. Elektronische Vorrichtung nach einem der Ansprüche 1 bis 7, wobei jede Schraube derart an die Drahtklemme drehbar gekoppelt ist, dass jede Schraube durch die Drahtklemme gehalten wird, jedoch in eine jeweilige Schraubenaufnahme einschraubbar ist, wenn die Drahtklemme in der ersten Klemmenposition ist.

9. Elektronische Vorrichtung nach einem der Ansprüche 1 bis 8, wobei die Abdeckung aus transparentem und/oder durchscheinendem Material ausgebildet ist.

10. Elektronische Vorrichtung nach einem der Ansprüche 1 bis 9, wobei, wenn in der ersten Klemmenposition, die Drahtklemmen und die Basis zusammenwirken, um einen beliebigen Draht, der durch den Drahtverbinder aufgenommen ist, zu klemmen, um eine Belastung an einem beliebigen aufgenommenen Draht über Manipulation des Drahts außerhalb des Anschlusskastens zu entlasten oder zu reduzieren.

11. Elektronische Vorrichtung nach einem der Ansprüche 1 bis 10, ferner umfassend einen oder mehrere Drähte, wobei:
der eine oder die mehreren Drähte in einem Kabelgehäuse (400) untergebracht sind; und
wenn in der ersten Klemmenposition, die Drahtklemme konfiguriert ist, um das Kabelgehäuse und dadurch einen beliebigen Draht, der durch den Drahtverbinder aufgenommen ist, an die Basis des Anschlusskastens zu klemmen.

## Revendications

1. Dispositif électronique (10) comprenant :
une boîte à bornes (100) comprenant une base (110) et un couvercle (120) mobile par rapport à la base ;
un connecteur de fil (130), logé dans la boîte à bornes, pour recevoir un ou plusieurs fils (401, 402, 403) destinés à transporter un ou plusieurs signaux électriques ou une puissance électrique vers/depuis le dispositif électronique ;
un serre-fil (140) supporté par le couvercle, le serre-fil étant conçu pour pouvoir coulisser, par rapport au couvercle lorsque le couvercle recouvre le connecteur de fil, entre une première position de serrage pour serrer tout fil reçu par le connecteur de fil à la base de la boîte à bornes et une seconde position de serrage pour desserrer tout fil reçu par le connecteur de fil ;
au moins une vis (151, 152) supportée par le serre-fil ; et
au moins un récepteur de vis (161, 162) accouplé à la base, l'au moins un récepteur de vis comprenant un récepteur de vis respectif pour chaque vis supportée par le serre-fil, chaque vis étant conçue pour pouvoir être vissée dans son récepteur de vis respectif,
dans lequel l'au moins une vis et au moins un récepteur de vis sont conçus pour, lorsque le serre-fil est dans la première position de serrage et qu'au moins une vis est vissée dans son récepteur de vis respectif, coopérer géométriquement pour maintenir le serre-fil dans la première position de serrage et pour maintenir le couvercle à la base de la boîte à bornes ;
dans lequel le couvercle et le serre-fil comprennent une pluralité de connecteurs à encliquetage (181, 182, 320, 330) formant une pluralité de systèmes à encliquetage ((181, 182), (181, 320), (181, 330)), chacun étant conçu pour, lorsqu'il est mis en prise, maintenir le serre-fil dans une première position de serrage potentielle différente par rapport au couvercle, afin de s'adapter de ce fait à différentes tailles du ou des fils à recevoir par le connecteur de fil.

2. Dispositif électronique selon la revendication 1, dans lequel :
le couvercle est un couvercle mobile conçu pour se déplacer entre une première position de couverture, dans laquelle le connecteur de fil est exposé, et une seconde position de couverture, dans laquelle le connecteur de fil est recouvert par le couvercle ; et
le serre-fil est mobile entre la première et la seconde position de pince lorsque le couvercle mobile est dans la seconde position de couvercle.

3. Dispositif électronique selon la revendication 2, dans lequel le couvercle est accouplé de manière rotative à la base de la boîte à bornes.

4. Dispositif électronique selon l'une quelconque des revendications 1 à 3, dans lequel la base et le couvercle de la boîte à bornes comprennent un premier système de connexion à encliquetage (171, 172, 173, 174) configuré pour, lorsque le couvercle est déplacé dans la seconde position de couverture, venir en prise avec le couvercle et le maintenir dans la seconde position de couverture.

5. Dispositif électronique selon l'une quelconque des revendications 1 à 4, dans lequel le couvercle et le serre-fil comprennent un second système de connexion à encliquetage (181, 182) conçu pour, lorsqu'il est mis en prise, maintenir le serre-fil dans la première position de pince par rapport au couvercle.

6. Dispositif électronique selon l'une quelconque des revendications 1 à 5, dans lequel le couvercle et le serre-fil comprennent un troisième système de connexion par encliquetage (350, 181) conçu pour, lorsqu'ils sont mis en prise, maintenir le serre-fil dans la seconde position de serrage par rapport au couvercle.

7. Dispositif électronique selon l'une quelconque des revendications 1 à 6, dans lequel l'au moins une vis comprend au moins deux vis et l'au moins un récepteur de vis comprend au moins deux récepteurs à vis.

8. Dispositif électronique selon l'une quelconque des revendications 1 à 7, dans lequel chaque vis est accouplée de manière rotative au serre-fil, de telle sorte que chaque vis est maintenue par le serre-fil mais peut être vissée dans un récepteur de vis respectif lorsque le serre-fil est dans la première position de pince.

9. Dispositif électronique selon l'une quelconque des revendications 1 à 8, dans lequel le couvercle est formé d'un matériau transparent et/ou translucide.

10. Dispositif électronique selon l'une quelconque des revendications 1 à 9, dans lequel, lorsqu'ils sont dans la première position de serrage, le serre-fil et la base coopèrent pour serrer tout fil reçu par le connecteur de fil de manière à soulager ou réduire une tension sur tout fil reçu à la manipulation du fil à l'extérieur de la boîte à bornes.

11. Dispositif électronique selon l'une quelconque des revendications 1 à 10, comprenant en outre un ou plusieurs fils, dans lequel :
le ou les fils sont logés dans un logement de câble (400) ; et
lorsqu'il est dans la première position de serrage, le serre-fil est conçu pour serrer le passage de câble, et donc tout fil reçu par le connecteur de fil, à la base de la boîte à bornes.
